# EUROPÄISCHE PATENTSCHRIFT

(11) **EP 2 234 210 B1**
(45) Veröffentlichungstag und Bekanntmachung des Hinweises auf die Patenterteilung: **11.05.2016**
(21) Anmeldenummer: 09290220.4
(22) Anmeldetag: 26.03.2009
(51) Int. Cl.: H01R 4/26, H01R 4/42, H02G 1/14

(54) **Klemme zum Festlegen eines elektrischen Leiters**
Clamp for fixing an electical conductor
Borne pour fixer un conducteur électrique

(43) Veröffentlichungstag der Anmeldung: 29.09.2010
(73) Patentinhaber: Nexans, 75008 Paris (FR)
(72) Erfinder: Stauch, Gert, Dr.-Ing., 95032 Hof (DE); Zapf, Martin, Dipl.-Ing., 95473 Creussen (DE); Grötsch, Peter, 95111 Rehau (DE); Markgraf, Volker, 95195 Röslau (DE)
(74) Vertreter: Döring, Roger

(56) Entgegenhaltungen:
- FR-A- 806 815
- FR-A- 2 637 739
- GB-A- 296 831
- GB-A- 652 676
- GB-A- 2 362 517

## Beschreibung

Die Erfindung bezieht sich auf eine Klemme zum Festlegen eines elektrischen Leiters gemäß dem Oberbegriff des Patentanspruchs 1. Der Oberbegriff ist aus der FR-A-806 815 bekannt.

Derartige Klemmen sind bekannt und auf dem Markt erhältlich. Sie sind beispielsweise in dem Prospekt "Universal LV straight joint connectors" der Firma B & H vom November 98, Dsheet 1/09, Issue 03 beschrieben. Solche Klemmen werden insbesondere als Kabelanschlußklemmen für Niederspannungsanlagen eingesetzt. Der Grundkörper einer derartigen Klemme dient selbst als Kontaktkörper. Er wird beispielsweise an eine Sammelschiene angeschlossen. Die bekannte Klemme besteht aus einem U-förmigen metallischen Grundkörper, in dem zwei Nuten zur Aufnahme einer mit mindestens einer Gewindebohrung versehenen Platte angebracht sind. In der Gewindebohrung befindet sich eine der Festlegung eines Leiters dienende Schraube. Bei Benutzung einer solchen Klemme wird zunächst ein Leiter in dieselbe eingelegt. Danach wird die Schraube angezogen, bis ein elektrischer Kontakt zwischen derselben und dem Leiter und zwischen dem Leiter und dem Boden des Grundkörpers hergestellt ist. Bei dieser bekannten Klemme ragt die Schraube auch in festgezogener Position über das Profil des Grundkörpers hinaus. Deshalb baut eine solche Klemme relativ hoch. Sie ist in kompakten elektrischen Anlagen, wie insbesondere Niederspannungsanlagen, mit entsprechend kleinen Abmessungen nur mit Einschränkungen oder gar nicht verwendbar.

Der Erfindung liegt die Aufgabe zugrunde, die eingangs geschilderte Klemme so zu gestalten, daß sie auch in räumlich engen elektrischen Anlagen einsetzbar ist.

Diese Aufgabe wird gemäß den kennzeichnenden Merkmalen des Patentanspruchs 1 gelöst.

Die Abmessungen dieser Klemme sind ausschließlich durch den Grundkörper bestimmt. In Arbeitsposition, d. h. bei in der Klemme festgelegtem Leiter, ragen keine zu derselben gehörenden Teile über das Profil des Grundkörpers hinaus. Die Klemme kann also problemlos überall dort eingesetzt werden, wo ein den Abmessungen des Grundkörpers entsprechende, begrenzter Raum zu Verfügung steht. Von Vorteil bei dieser Klemme ist auch die um eine ihrer Seitenkanten schwenkbare Druckplatte, die auf der dieser Seitenkante gegenüber liegenden Seite mit dem Grundkörper verschraubt wird und dadurch mit einer Art Hebelwirkung eine erhöhte Anpresskraft für den geklemmten Leiter ermöglicht.

Ein Ausführungsbeispiel des Erfindungsgegenstandes ist in den Zeichnungen dargestellt.

Es zeigen:
Fig. 1 ein Schnittbild eines Grundkörpers der Klemme nach der Erfindung.
Fig. 2 einen Schnitt durch Fig. 1 längs der Linie II - II.
Fig. 3 eine Seitenansicht des Grundkörpers nach Fig. 1.
Fig. 4 eine in der Klemme verwendbare Druckplatte.
Fig. 5 die Klemme mit Zubehör in der Ausgangsstellung.
Fig. 6 die Klemme nach Fig. 5 in Arbeitsposition.

Der Boden des Grundkörpers der Klemme verläuft in dem in den Zeichnungen dargestellten Ausführungsbeispiel geradlinig. Er kann in Abweichung von der zeichnerischen Darstellung auch nach außen, also vom Innern des Grundkörpers wegweisender Richtung, gebogen verlaufen und dadurch einen der Form des festzulegenden Leiters angepaßten "Aufnahmeraum" bilden. Die Klemme hat insgesamt in der dargestellten Ausführungsform nur eine Schraube. Bei entsprechender Gestaltung der Einzelteile der Klemme können auch zwei oder mehr Schrauben eingesetzt werden.

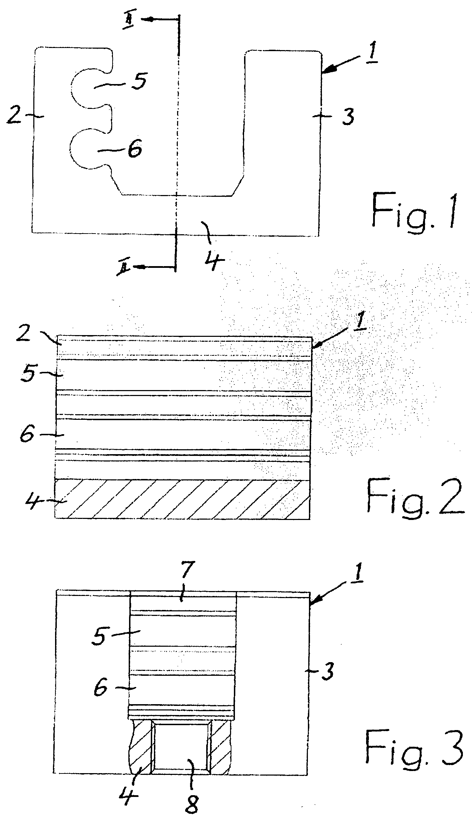

In Fig. 1 ist ein etwa U-förmiger Grundkörper 1 einer elektrischen Klemme im Schnitt dargestellt, der zwei parallel zueinander verlaufende Schenkel 2 und 3 sowie einen dieselben verbindenden Boden 4 aufweist. Im dargestellten Ausführungsbeispiel sind im Schenkel 2 des Grundkörpers 1 zwei Nuten 5 und 6 angebracht. Sie können gemäß Fig. 2 über die ganze Breite des Grundkörpers 1 verlaufen, können aber auch kürzer als derselbe sein. Es soll mindestens eine Nut im Schenkel 2 des Grundkörpers 1 angebracht sein. Es können auch mehr als zwei Nuten sein, wenn die Abmessungen des. Grundkörpers 1 das zulassen. Der Grundkörper 1 besteht als elektrischer Kontaktkörper aus einem elektrisch gut leitenden Material, vorzugsweise aus einer Aluminiumlegierung oder aus Kupfer. In Arbeitsposition ist der Grundkörper 1 elektrisch leitend in eine elektrische Anlage eingebaut und dort beispielsweise mit einer Sammelschiene verbunden.

Im Schenkel 3 des Grundkörpers 1 ist gemäß Fig. 3 etwa mittig eine Ausnehmung 7 angebracht, die nahezu über die ganze Höhe des Grundkörpers 1 verläuft und in einer vom Boden 4 wegweisenden Richtung offen ist. Im Boden der Ausnehmung 7 ist im verbleibenden Rest des Schenkels 3 bzw. des Bodens 4 ein Gewindeloch 8 angebracht.

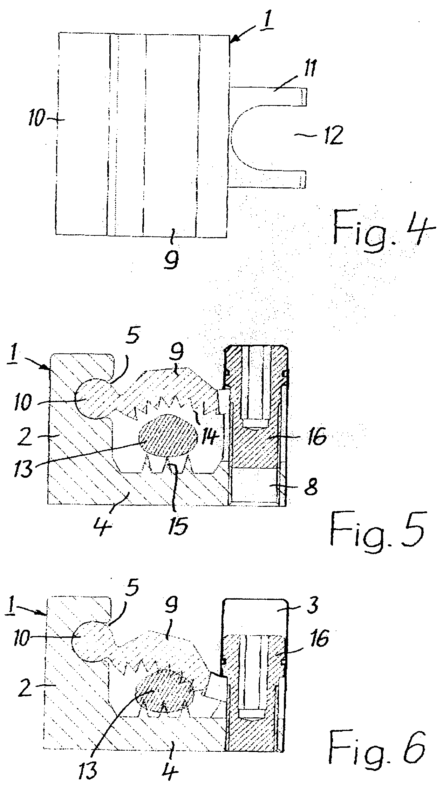

Zur Klemme nach der Erfindung gehört auch eine in Fig. 4 dargestellte Druckplatte 9, die etwa rechteckig ausgeführt ist. Sie kann mit Vorteil aus dem gleichen Material bestehen, wie der Grundkörper 1. Die Druckplatte 9 hat eine Seitenkante 10, die in Arbeitsposition gemäß den Fig. 5 und 6 in die Nut 5 des Grundkörpers 1 eingreift. Die Nut 6 ist in den Fig. 5 und 6 der Übersichtlichkeit halber nicht mit dargestellt. Wenn zwei oder mehr Nuten im Schenkel 2 angebracht sind, kann die Seitenkante 10 der Druckplatte 9 in Abhängigkeit vom Durchmesser des in der Klemme festzulegenden Leiters in einer jeweils geeigneten Höhe über dem Boden 4 in die entsprechende Nut eingebracht werden. Die Seitenkante 10 der Druckplatte 9 ist mit Vorteil etwas verdickt und abgerundet, so wie es aus den Fig. 5 und 6 hervorgeht. Der Querschnitt der Nut 5 bzw. der Nuten 5 und 6 ist vorzugsweise an die Form der Seitenkante 10 angepaßt.

Auf der der Seitenkante 10 gegenüber liegenden Seite der Druckplatte 9 ist etwa mittig ein von derselben abstehender Steg 11 angeformt, in dem eine Durchbrechung 12 angebracht ist. Die Durchbrechung 12 kann, so wie es in Fig. 4 dargestellt ist, nach außen offen sein. Sie kann aber auch als Durchgangsloch ausgeführt sein. Die Breite des Steges 11 ist so bemessen, daß derselbe in die Ausnehmung 7 im Schenkel 3 des Grundkörpers 1 paßt. Auf der einem in der Klemme festzuklemmenden Leiter 13 zugewandten Fläche der Druckplatte 9 kann eine Vielzahl von von derselben abstehenden Spitzen 14 angebracht sein. Am Boden 4 des Grundkörpers 1 kann ebenfalls eine Anzahl von Spitzen 15 angebracht sein, die in Richtung des Leiters 13 von demselben abstehen. Die Druckplatte 9 kann entsprechend der Darstellung in den Fig. 5 und 6 mit Vorteil schwach gebogen ausgeführt sein. Sie ist dann etwas besser an die Kontur eines in der Klemme festzulegenden Leiters angepaßt.

Die Durchbrechung 12 im Steg 11 der Druckplatte 9 dient zur Aufnahme einer ebenfalls zur Klemme gehörenden Schraube 16, welche in Arbeitsposition in das Gewindeloch 8 der Ausnehmung 7 eingeschraubt ist.

Der Leiter 13 wird beispielsweise wie folgt in der Klemme nach der Erfindung befestigt:

Zunächst wird der Leiter 13 so in den Grundkörper 1 eingelegt, daß sich sein Ende möglichst über die ganze Breite desselben erstreckt. Das Ende des Leiters 13 kann abisoliert sein. Es kann aber auch mit einer den Leiter umgebenden Isolierung in den Grundkörper 1 eingelegt werden. Danach wird die Druckplatte 9 mit ihrer Seitenkante 10 in die Nut 5 eingesteckt und auf den Leiter 13 aufgelegt. Anschließend wird die Schraube 16 in die Durchbrechung 12 im Steg 11 gesteckt, in das Gewindeloch 8 hineingedreht und fest angezogen, bis sie ihre aus Fig. 6 ersichtliche Position erreicht hat. Der Leiter 13 ist dann fest zwischen der Druckplatte 9 und dem Boden 4 des Grundkörpers 1 eingeklemmt. Die Schraube 16 liegt abschließend vollständig innerhalb der Ausnehmung 7 und damit innerhalb des Profils des Grundkörpers 1. Von demselben stehen keine Teile ab. Die Spitzen 14 und 15 sind in der Endposition der Druckplatte 9 in den Leiter 13 eingedrungen. Sie haben gegebenenfalls auch eine Isolierung desselben durchdrungen.

## Patentansprüche

1. Klemme zum Festlegen eines elektrischen Leiters, die aus einem metallischen Grundkörper zur Aufnahme des Leiters besteht, der etwa U-förmig mit zwei parallel zueinander verlaufenden Schenkeln (2, 3) und einem dieselben verbindenden Boden (4) ausgeführt ist, bei welcher in dem Grundkörper eine Platte (9) angebracht ist, durch welche mindestens eine der Festlegung des Leiters dienende Schraube (16) hindurchragt, **dadurch gekennzeichnet,**
- **daß** die Platte eine etwa rechteckige Druckplatte (9) ist, die mit einer ihrer Seitenkanten (10) beweglich in einer Nut (5,6) gelagert ist, welche an der Innenseite eines ersten Schenkels (2) des Grundkörpers (1) angebracht ist,
- **daß** in dem Boden (4) des Grundkörpers (1) auf der dem ersten Schenkel (2) abgewandten Seite desselben ein parallel zum Schenkel verlaufendes Gewindeloch (8) angebracht ist,
- **daß** auf der der für die Lagerung dienenden Seitenkante (10) gegenüber liegenden Seite der Druckplatte (9) ein von derselben abstehender Steg (11) mit einer Durchbrechung (12) angebracht ist,
- **daß** der zweite Schenkel (3) des Grundkörpers (1) etwa mittig eine Ausnehmung (7) zur Aufnahme des Stegs (11) der Druckplatte (9) aufweist, die in vom Boden (4) des Grundkörpers (1) wegweisender Richtung offen ist und in der das Gewindeloch (8) angebracht ist, und
- **daß** die Schraube (16) in Arbeitsposition durch die Durchbrechung (12) der Druckplatte (9) hindurchragt und unter Anlage derselben am festzulegenden Leiter (13) in das Gewindeloch (8) des Grundkörpers (1) eingeschraubt ist und vollständig innerhalb des Profils des Grundkörpers (1) liegt.

2. Klemme nach Anspruch 1, **dadurch gekennzeichnet, daß** der Boden (4) des Grundkörpers (1) geradlinig verläuft.

3. Klemme nach Anspruch 1, **dadurch gekennzeichnet, daß** der Boden (4) des Grundkörpers (1) von dessen Innerem wegweisend gebogen verläuft.

4. Klemme nach einem der Ansprüche 1 bis 3, **dadurch gekennzeichnet, daß** der Boden (4) des Grundkörpers (1) eine Vielzahl von in Richtung des festzulegenden Leiters (13) von demselben abstehenden Spitzen (15) aufweist, die in der Endposition der Druckplatte (9) in den Leiter (13) eingedrungen sind.

5. Klemme nach einem der Ansprüche 1 bis 3, **dadurch gekennzeichnet, daß** auf der zur Anlage am Leiter (13) bestimmten Fläche der Druckplatte (9) eine Vielzahl von von derselben abstehenden Spitzen (14) angebracht ist, die in deren Endposition in den Leiter (13) eingedrungen sind.

6. Klemme nach einem der Ansprüche 1 bis 5, **dadurch gekennzeichnet, daß** die der Lagerung dienende Seitenkante (10) der Druckplatte (9) verdickt und abgerundet ist.

## Claims

1. Clamp for the fastening of an electrical conductor, consisting of a metallic basic body (1) for the insertion of the conductor, which is U-shaped with two side pieces (2,3) running parallel to each other and a bottom (4) which connects the two side pieces (2,3), a plate (9) being provided in the basic body which is penetrated by at least one screw (16) for the fastening of the conductor, **characterized in**
- **that** the plate is a rectangular pressure plate (9) which is placed with one side edge (10) moveably within at least one nut (5,6) which is provided at the inner side of a first side piece (2) of the basic body (1),
- **that** in the bottom (4) of the basic body (1) at the side opposite to the first side piece (2) a taphole (8) is provided which runs parallel to the side piece,
- **that** at the side of the pressure plate (9) which is opposite to the side edge (10) in which the pressure plate (9) is placed a bar (11) with a recess (12) is provided which protrudes from the pressure plate (9),
- **that** the second side piece (3) of the basic body (1) has in its middle a recess (7) for the insertion of the bar (11) of the pressure plate (9) which is open in opposite direction to the bottom (4) of the basic body (1) and within which the taphole (8) is placed, and
- **that** in mounting position the screw (16) is passed through the recess (12) of the pressure plate (9) and is screwed with contact to the conductor (13) into the taphole (8) of the basic body (1) and is integrated completely within the profile of the basis body (1).

2. Clamp according to claim 1, **characterized in that** the bottom (4) of the basic body (1) is rectilinear.

3. Clamp according to claim 1, **characterized in that** the bottom (4) of the basic body (1) is bended in the direction facing away from the basic body (1).

4. Clamp according to one of the claims 1 to 3, **characterized in that** the bottom (4) of the basic body (1) has a plurality of peaks (15) protruding from the same in the direction of the conductor (13) to be fastened, which penetrate into the conductor (13) in the end position of the pressure plate (9).

5. Clamp according to one of the claims 1 to 3, **characterized in that** the surface of the pressure plate (9) which is provided for contacting the conductor (13) has a plurality of peaks (14) which protrude from the surface and which in the end position of the pressure plate (9) penetrate into the conductor (13).

6. Clamp according to one of the claims 1 to 5, **characterized in that** the side edge (10) of the pressure plate (9) which is provided for its bearing is thickened and rounded.

## Revendications

1. Borne pour fixer un conducteur électrique, qui est réalisée à partir d'un corps de base métallique pour recevoir le conducteur, qui est réalisé approximativement en forme de U avec deux branches (2, 3) s'étendant parallèlement l'une à l'autre et un fond (4) reliant celles-ci, une plaque (9) étant montée dans le corps de base, à travers laquelle pénètre au moins une vis (16) servant à la fixation du conducteur, **caractérisée en ce**
- **que** la plaque est une plaque de pression approximativement rectangulaire (9) qui est supportée de manière déplaçable avec l'une de ses arêtes latérales (10) dans une rainure (5, 6) qui est réalisée sur le côté intérieur d'une première branche (2) du corps de base (1),
- **que** un trou fileté (8) s'étendant parallèlement à la branche est réalisé dans le fond (4) du corps de base (1) sur le côté de celui-ci opposé à la première branche (2),
- **que** sur le côté de la plaque de pression (9) situé à l'opposé de l'arête latérale (10) servant au support est réalisée une nervure (11) en saillie depuis ladite plaque de pression et comprenant un orifice (12),
- **que** la deuxième branche (3) du corps de base (1) présente approximativement centralement un évidement (7) pour recevoir la nervure (11) de la plaque de pression (9), lequel est ouvert dans la direction opposée au fond (4) du corps de base (1) et dans lequel est réalisé le trou fileté (8), et
- **que** la vis (16), dans la position de travail, traverse l'orifice (12) de la plaque de pression (9) et lorsque cette dernière est en appui contre le conducteur à fixer (13), est vissée dans le trou fileté (8) du corps de base (1) et est située complètement à l'intérieur du profilé du corps de base (1).

2. Borne selon la revendication 1, **caractérisée en ce que** le fond (4) du corps de base (1) s'étend en ligne droite.

3. Borne selon la revendication 1, **caractérisée en ce que** le fond (4) du corps de base (1) s'étend avec une courbure s'écartant de l'intérieur de celui-ci.

4. Borne selon l'une quelconque des revendications 1 à 3, **caractérisée en ce que** le fond (4) du corps de base (1) présente une pluralité de pointes (15) faisant saillie depuis celui-ci en direction du conducteur à fixer (13), lesquelles sont enfoncées dans le conducteur (13) dans la position finale de la plaque de pression (9).

5. Borne selon l'une quelconque des revendications 1 à 3, **caractérisée en ce que** sur la surface de la plaque de pression (9) prévue pour être appliquée contre le conducteur (13) est montée une pluralité de pointes (14) faisant saillie depuis celle-ci, lesquelles sont enfoncées dans le conducteur (13) dans la position finale de la surface de la plaque.

6. Borne selon l'une quelconque des revendications 1 à 5, **caractérisée en ce que** l'arête latérale (10) de la plaque de pression (9) servant au support est épaissie et arrondie.
